# EUROPEAN PATENT APPLICATION

(11) **EP 3 263 663 A1**
(43) Date of publication of application: **03.01.2018**
(21) Application number: 16176531.8
(22) Date of filing: 27.06.2016
(51) Int. Cl.: C09D 133/08, C09D 167/08

(54) **KIT-OF-PARTS FOR A COATING SYSTEM, COATING SYSTEM AND USE THE KIT-OF-PARTS FOR THE PREPARATION OF A COATING**

(71) Applicant: DAW SE, 64372 Ober-Ramstadt (DE)
(72) Inventor: Lamken Martin, 411027 Göteborg (SE); Johannesson Niclas, 516 92 Äspered (SE); Karlsson Jonas, 426 68 Västra Frölunda (SE); Olsson Yvonne, 519 96 Fotskäl (SE)
(74) Representative: Metten, Karl-Heinz

(57) **Abstract**

The present invention relates to a kit-of-parts for a coating system for exterior substrates comprising at least two aqueous coating compositions, in particular two aqueous coating compositions, wherein a) a first aqueous coating composition comprises or consists of a first oxidatively drying long oil alkyd resin, at least one surfactant, at least one organic rheology modifier, at least one acrylic-based binder and/or polyurethane-based binder, at least one additive, and optionally at least one pigment; and wherein b) a second aqueous coating composition comprises or consists of at least one acrylic-based binder and/or polyurethane-based binder, at least one surfactant, at least one rheology modifier, at least one additive, and optionally at least one pigment and/or optionally at least one, in particular oxidatively drying, alkyd resin, in particular long oil alkyd resin. The present invention further relates to a coating system, in particular wood coating system, comprising a first coating and a second coating obtained or obtainable from the kit-of-parts according to the present invention, wherein the first coating is obtained or obtainable from the first aqueous coating composition and wherein the second coating is obtained or obtainable from the second aqueous coating composition. And, the present invention is also about the use of the kit-of-parts for a coating system according to the present invention for preparing an at least two-layered, in particular a two-layered, coating on a substrate, in particular a wood substrate.

## Description

The present invention pertains to a kit-of-parts for a coating system for exterior substrates, in particular wood substrates. Further, the present invention pertains to a coating system, in particular a wood coating system. And, the present invention also pertains to the use of said kit-of-parts for the preparation of an at least two-layered coating on a substrate. Finally, the present invention pertains to an aqueous coating composition and to a base for an aqueous coating composition, in particular for wood substrates.

Paints for wood panels for exterior use usually not only have to serve a decorative function but also must provide a protection against weathering conditions such as rain, humid conditions, irradiation and freezing. Such paints are also expected to have good color retention. In order to fulfill the aforementioned requirements usually three coatings are applied to a wood substrate, namely a primer coating as well as a first and a second paint coating.

In addition to the aforementioned prerequisites for environmental reasons it is more and more important to provide coating compositions with a low content of volatile organic compounds (VOC). As a consequence aqueous coating compositions are now regularly used for painting wood substrates. Consumers expect that these aqueous coating compositions furnish the same quality standards as solvent-born compositions. Aqueous coating compositions for wood substrates therefore nowadays regularly rely on, among others, the presence of medium oil or long oil alkyd resins which can be oxidatively dried.

However, the performance of such aqueous coating compositions still has some drawbacks. It would have been desirable to be able to make use of improved aqueous coating compositions which overcome the disadvantages of existing coating compositions for wood substrates. Therefore, it has been an object of the present invention to provide aqueous coating compositions which exhibit good penetration properties, allow for good color retention, are environmentally safe and can be easily and economically applied.

These problems have been solved by a kit-of-parts for a coating system for exterior substrates, in particular wood substrates, comprising at least two aqueous coating compositions, in particular two aqueous coating compositions, wherein
a) a first aqueous coating composition comprises or consists of
   a first oxidatively drying long oil alkyd resin,
   at least one surfactant,
   at least one organic rheology modifier,
   at least one acrylic-based binder and/or polyurethane-based binder,
   at least one additive, and
   preferably at least one pigment; and wherein
b) a second aqueous coating composition comprises or consists of
   at least one organic binder, preferably an acrylic-based binder and/or polyurethane-based binder, and in particular at least one acrylic-based binder,
   at least one surfactant,
   at least one, in particular organic, rheology modifier,
   at least one additive, and
   preferably at least one pigment, and
   optionally at least one, in particular oxidatively drying, alkyd resin, in particular long oil alkyd resin.

A long oil alkyd resin in the meaning of the present invention has an oil content/oil length which is generally above 60%. A short oil alkyd resin in the meaning of the present invention has an oil content/oil length which is typically in the range from 20 to 40% and a middle oil alkyd resin as an oil content/oil length in the range from above 40% to 60%. The oil length/oil content in the meaning of the present invention generally is the percent fatty acid calculated based on the ester unit formed with the polyol unit of the polyester backbone of the alkyd resin, for example as triglyceride. The higher the oil length/oil content the higher the ratio of fatty acids per polyester molecule. In the meaning of the present invention the terms "oil length" and "oil content" are used synonymously.

Alkyd resins can be defined as oil modified polyesters produced from dicarboxylic acids or anhydrides, such as phthalic anhydride or maleic anhydride, and polyols, such as trimethylolpropane, glycerine, or pentaerythritol wherein the remaining free hydroxy groups of the polyols in the polymer backbone are esterified with fatty acids. If said fatty acids contain at least one double bond an oxidatively drying alkyd resin is obtained. If fatty acids are used for the production of alkyd resins which do not contain any double bonds it is no longer amenable to an oxidative drying process. These are called non-(oxidatively)-drying alkyd resins. Oxidative drying requires the presence of oxygen, usually so-called curing by air, which in reaction with the double bonds of the oil component of the alky resin, i.e. with the double bonds of the unsaturated fatty acid residues, generates radical reactions forming a covalently bonded network.

Oxidatively drying long oil alkyd resins can usually be used solvent-free. Solvent-free in the meaning of the present invention means substantially no organic solvent is present and/or wherein the volatile organic compound (VOC) amount is less than about 25 g/l. The VOC for these purposes means any organic compound having an initial boiling point less than or equal to 250°C measured at a standard pressure of 101.3 kPa.

Suitable unsaturated fatty acids to be used for the production of oxidatively drying long oil alkyd resins comprise plant and vegetable oils, e.g. tung oil, tall oil, safflower oil, fish oil, castor oil, dehydrated castor oil, sunflower oil, linseed oil and/or soya oil (soy bean oil). Linseed oil, tung oil, tall oil and soya oil or a mixture of any of the aforementioned oils are preferred. Suitable unsaturated fatty acids can be selected from the group consisting of alpha-linolenic acid, gamma-linolenic acid, stearidonic acid, eicosapentaenoic acid, do-cosahexaenoic acid, linoleic acid, arachidonic acid, palmitoleic acid, vaccenic acid, paullinic acid, oleic acid, ricinoleic acid, elaidic acid, eicosadienoic acid, docosadionoic acid, gadoleic acid, myristoleic acid, elaidic acid, erucic acid, nervonic acid, pinolenic acid, eleostearic acid, and mixtures thereof.

The oxidatively drying long oil alkyd resins oil usually have an iodine number according to DIN 53241-1 of more than 130 and preferably of more than 160.

The oxidative drying process can be influenced, in particular accelerated, by the use of so-called driers, e.g. metal salts and/or complexing agents. Such driers are adapted and arranged to promote the oxidative curing of the oxidatively drying alkyd resins. Suitable driers comprise for example metal salts of aliphatic acids including cycloaliphatic acids, such as octanoic acid and naphthenic acid. Here, the metal can be selected from the group consisting of cobalt, manganese, vanadium, lead, zirconium, calcium, zinc, rare earth metals and mixtures thereof. Suitable complexing agents comprise, for example, 2,2'-bipyridyl and 1 ,10-phenantroline.

The scope of the kit-of-parts for a coating system according to the present invention addresses both tintable bases as well as tinted color compositions. Accordingly, with the present invention kit-of-parts for a coating system is provided wherein the first aqueous coating composition is a base composition adapted and arranged to be tinted to form a color composition or wherein said first aqueous coating composition is a tinted color composition and/or wherein the second aqueous coating composition is a base composition adapted and arranged to be tinted to form a color composition or wherein said second aqueous coating composition is a tinted color composition. Accordingly, the kit-of-parts for a coating system according to the present invention preferably covers two general embodiments. According to a first embodiment said kit-of-parts for a coating system makes use of a first aqueous coating composition in the form of a base composition which is adapted and arranged to be tinted to form a color composition, i.e. to be tintable, and wherein said second aqueous coating composition is a base composition adapted and arranged to be tinted to form a color composition, i.e. to be tintable. According to a second embodiment said kit of parts for a coating system makes use of a first aqueous coating composition which already is a color composition, in particular a tinted color composition, and of a second aqueous coating composition which already is a color composition, in particular a tinted color composition.

In case the kit-of-parts of the coating system of the present invention makes use of a first aqueous coating composition in the form of a base composition, that is of a base which is used to obtain a tinted color composition, it is not necessary that said base composition contains a pigment. In this embodiment, it is preferred that the base composition comprises at least one filler material. In a suitable embodiment the base composition can contain both at least one pigment, for example titanium dioxide, and at least one filler material. In case the kit-of-parts of the coating system of the present invention makes use of first aqueous coating compositions in the form of an, in particular tinted, color composition said coating composition regularly comprises at least one pigment. In a preferred embodiment said first aqueous coating composition comprises both at least one pigment, for example titanium dioxide, and at least one filler material, in particular a silicate filler material. And, in case the kit-of-parts of the coating system of the present invention makes use of a second aqueous coating composition in the form of a base composition, that is of a base which is used to obtain a tinted color composition, it is not necessary that said base composition contains a pigment. In this embodiment, it is preferred that the base composition comprises at least one filler material. In a suitable embodiment the base composition can contain both at least one pigment, for example titanium dioxide, and at least one filler material. In case the kit-of-parts of the coating system of the present invention makes use of second aqueous coating compositions in the form of an, in particular tinted, color composition said coating composition regularly comprises at least one pigment. In a preferred embodiment said second aqueous coating composition comprises both at least one pigment, for example titanium dioxide, and at least one filler material, in particular a silicate filler material.

According to a preferred embodiment the kit-of-parts of the present invention is characterized by a first aqueous coating composition which further comprises at least one second oxidatively drying long oil alkyd resin having a lower oil content/oil length than the first oxidatively drying alkyd resin. Without being bound by theory it is believed that while the second oxidatively drying long oil alkyd resin is essentially responsible for good drying characteristics the first oxidatively drying long oil alkyd resin allows for the observed good penetration properties.

In a very suitable embodiment the first oxidatively drying long oil alkyd resin has an oil content of more than 75 %, preferably of at least 78 % and more preferred of at least 81 %, e.g. of about 83 to 86 %. Moreover, it is also preferred if, independently and, advantageously, simultaneously, the second oxidatively drying long oil alkyd resin has an oil content of less than 75 %, preferably of not more than 74 % and more preferred of not more than 72 %, e.g. of about 68 to 71 %. The weight ratio of the first oxidatively drying long oil alkyd resin to the second oxidatively drying long oil alkyd resin preferably is in the range from 80:20 to 20:80 and more preferred in the range from 70:30 to 30:70.

It has been found to be advantageous, in particular in terms of color retention and gloss, when the second aqueous coating composition does not contain any, in particular oxidatively drying, long oil alkyd resins and in particular does not contain any, in particular oxidatively drying, alkyd resins at all. It is even more preferred to make use of a second aqueous coating composition which not only is free of any oxidatively drying alkyd resins but which makes exclusively use of acrylic binders.

Particularly preferred results, e.g. in terms of increased thickness of the first coating, are obtained in that the organic rheology modifier of the first aqueous coating composition is selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof. Even more preferred the first aqueous coating composition comprises both at least one hydrophobically modified ethylene oxide urethane (HEUR) rheology modifier and at least one urea modified polyurethane.

Urea-modified polyurethane can be prepared by the reaction between a polyisocyanate and a polyol in the presence of a diamine. According to a preferred method the reaction can be carried out by first forming a prepolymer of the polyisocyanate with the polyol, and then curing this with a solution of the diamine in a further amount of the polyol. In urea-modified polyurethanes urea linkages are incorporated in the basic urethane backbone structure (i.e. the carbamate linkage).

It has also been surprisingly found that the problem underlying the present invention can be properly solved in that the at least one surfactant of the first aqueous coating composition comprises at least one cationic surfactant and/or at least one anionic surfactant and/or at least one non-ionic surfactant, preferably at least one cationic surfactant and at least one anionic surfactant and optionally at least on non-ionic surfactant and more preferably at least one cationic surfactant and at least one anionic surfactant and at least one non-ionic, surfactant. The non-ionic surfactant is primarily used for dispersing pigments.

Satisfying penetration properties can also be obtained in that the first oxidatively drying long oil alkyd resin is based on pentaerythrityl esters and/or in that said second oxidatively drying alkyd resin is based on triglycerides, preferably in that the first oxidatively drying long oil alkyd resin is based on pentaerythrityl esters and in that said second oxidatively drying alkyd resin is based on triglycerides.

The organic binder in the first and/or second aqueous coating composition preferably is an acrylic binder. An acrylic-based binder in the meaning of the present invention and as added to the coating compositions is an organic binder in the form of an aqueous dispersion based on a polymer comprising acrylates or based on a copolymer comprising acrylates and vinyl acetate, acrylates and styrene or acrylates, styrene and vinyl acetate.

Acrylic binder in general rely on acrylates, methacrylates, acrylic acid and methacrylic acid as the only comonomers, e.g. no styrene or any other non-acrylic comonomer being present.

Pigments include inorganic and organic pigments. Pigments different from dyes are usually not soluble in the medium that is to be colored by the use of pigments. Suitable pigments include, for example, titanium dioxide, iron oxides, manganese oxides, chrome/iron/nickel oxides, chrome/iron oxides, perylenes, and colored pigments such as C.I. pigment blue 15, C.I. pigment Green 7, C.I. pigment red 122, C.I. pigment yellow 154, C.I. pigment Violet 15 and/or pigment orange 71, to mention a few.

Kit-of-parts for a coating system according to the invention are preferred in which the first aqueous coating composition and/or the second aqueous coating composition of the kit-of parts for a coating system according to the present invention further comprise at least one filler material, in particular silicates. It has surprisingly been found that in particular with the first aqueous coating composition a high long oil alkyd resin content, in particular a high oxidatively drying long oil alkyd resins content, can be achieved. For example, the long oil alkyd resin content, in particular a high oxidatively drying long oil alkyd resins content is at least 10 weight %, preferably in the range from 12 to 30 weight % and more preferably in the range from 15 to 25 weight %. It has been found that with such a high alkyd resin content a rather reduced water uptake can be accomplished.

Suitable filler materials include fillers based on carbonates as well as fillers based on silicates as well as mixtures thereof. Suitable silicates comprise for example talcum, mica, aluminium silicates and mixtures thereof.

In a preferred embodiment the first aqueous coating composition contains at least two fillers which differ with regard to their chemical structure and/or to their particle size distribution, in particular with regard to their D₅₀ values. In this manner a desirable gloss retention can usually be obtained.

According to very suitable embodiments said first filler has a D₅₀ value from 2 to 10 µm, preferably from 3 to 6 µm and more preferably from 4 to 5 µm, and said second filler has a D₅₀ value from 5 to 20 µm, preferably from 6 to 15 µm and more preferably in the range from 6,5 to 10 µm. Furthermore, those kit-of-parts according to the present invention are preferred in which said first filler has a D₉₀ value not above 20 µm, preferably not above 15 5 µm and more preferably not above 12 µm.

Generally the additive of said first aqueous coating composition and/or the additive of said second aqueous coating composition of the kit-of parts for a coating system according to the present invention comprises at least one drier, at least one defoamer, at least one preservative, in particular at least one biocide, and/or at least one film forming agent. Preferably said additives being present in the first and/or second aqueous coating compositions comprise at least one drier, at least one defoamer, at least one preser-vative, in particular at least one biocide, and optionally at least one film forming agent.

The kit-of-parts for a coating system according to the present invention in a preferred embodiment is characterized in that the first aqueous coating composition comprises 5 to 40 weight %, preferably 10 to 30 weight % and more preferably 10 to 25 weight % filler material, and/or 5 to 35 weight %, preferably 10 to 30 weight % and more preferably 15 to 25 weight % of the at least one, in particular oxidatively drying, long oil alkyd resin and/or 0,1 to 8 weight %, preferably 0,5 to 7 weight % and more preferably from 1,0 to 5 weight % of the at least one surfactant and/or 2 to 25 weight %, preferably 2 to 20 weight % and more preferably 5 to 15 weight % of the at least one acrylic-based (solid content), binder and/or 5 to 40 weight %, preferably 8 to 30 weight % and more preferably 10 to 25 weight % water, and/or 0 to 40 weight % or 1 to 40 weight %, preferably 2 to 30 weight % and more preferably 5 to 25 weight % of the at least one pigment, wherein the components forming the first aqueous coating composition always add up to 100 weight %.

Alternatively or, preferably, simultaneously the kit-of-parts for a coating system according to the present invention is characterized in that the second aqueous coating composition comprises 2 to 25 weight %, preferably 4 to 20 weight % and more preferably from 5 to 15 weight % of the filler material, and/or 0 to 12 weight %, preferably 0 to 10 weight % and more preferably 1 to 5 weight % of the alkyd resin, in particular of the oxidatively drying long oil alkyd resin, 5 to 40 weight %, preferably 10 to 30 weight % and more preferably 12 to 25 weight % of the acrylic-based binder (solid content) and/or 30 to 70 weight %, preferably 35 to 60 weight % and more preferably 40 to 55 weight % water, and/or 0 to 30 weight % or 1 to 30 weight %, preferably 2 to 25 weight % and more preferably 5 to 20 weight % of at least one pigment, wherein the components forming a second aqueous coating composition always add up to 100 weight %.

The problem underlying the present invention has also been solved by a coating system, in particular wood coating system, comprising a first coating and a second coating obtained or obtainable from the kit-of-parts according to the present invention, wherein the first coating is obtained or obtainable from said first aqueous coating composition and wherein the second coating is obtained or obtainable from said second aqueous coating composition.

In a preferred embodiment of the coating system of the present invention the first coating obtained from said first aqueous coating composition has an average thickness of at least 75 µm, preferably of at least 100 µm and more preferably of at least 125 µm. Alternatively or, preferably, simultaneously said second coating has an average thickness that is not above 100 µm, preferably not above 75 µm and more preferably not above 60 µm. The overall thickness of the coating system of the present invention can be in the range from 130 µm to 300 µm, preferably in the range from 140 µm to 250 µm and more preferably in the range from 150 µm to 220 µm.

A wood substrate, for example a wood panel, which has been provided with the coating system of the present invention, it is with said first coating and said second coating as described above, allows for a very effective prevention ofwater uptake into the wood.

Water uptake can be measured after soaking samples in water for 72 hours according to EN 927-5:2007-03. The procedure as described in EN 927-5:2007-03 requires to employ coated wood panels having the following dimensions: 150 mm x 70 mm x 20 mm, which are sealed on the back side and along the edges and which are preconditioned according to the aforementioned standard and subsequently floated on water for 72 hours. The water uptake during floating is determined by weighing and the result can be presented as water uptake in g/m².

According to EN 927-5:2007-03 a water absorption below the threshold of 175g/m² as set by EN 927-2:2014-11 shall classify a coating as a so-called stable substrate. With the coating system according to the present invention, that is with only two coatings, it is possible to arrive at water uptake values of below 170 g/m², preferably below 140 g/m² and even more preferred below 120 g/m².

Any of the embodiments and also of the preferred embodiments described herein for the kit-of-parts of the present invention are applicable as well for the coating system of the present invention.

With the coating system according to the present invention the first coating is typically placed on a substrate, in particular a wood substrate, and wherein said second coating is placed on said first coating. In general, the second coating is applied to the first coating about 6 to 10, or 8 to 12 or 10 to 24 hours after application of the first coating to the substrate depending on the progress of the drying process.

A sufficient hiding power is usually obtained with the coating system according to the present invention when both the first aqueous coating composition and the second aqueous coating composition contain the same pigment or pigments.

The problem underlying the present invention has also been solved by an aqueous coating composition or base for an aqueous coating composition, in particular for wood substrates, comprising or consisting of
al) at least one first oxidatively drying long oil alkyd resin, in particular being based on pentaerythrityl esters, and
a2) at least one second oxidatively drying long oil alkyd resin, in particular being based on triglycerides, wherein said second oxidatively drying long oil alkyd resin has a lower oil content than said first oxidatively drying alkyd resin,
b1) at least one cationic surfactant, in particular selected from the group consisting of polyoxyethylene-(2-15)-cocoalkylamines, polyoxyethylene-(12-18)-tallowalkylamines, polyoxyethylene-(2-15)-oleylamines and mixtures thereof,
b2) at least one anionic surfactant, in particular selected from the group consisting of sodium lauryl sulfate, sodium octylphenol glycolether sulfate, sodium dodecylbenzene sulfonate, sodium lauryldiglycol sulfate, ammonium tritertiarybutyl phenol and penta- and octa-glycol sulfonates, sulfosuccinate salts, in particular disodium ethoxylated nonylphenol half esters of sulfosuccinic acid, disodium n-octyldecyl sulfosuccinate, sodium dioctyl sulfosuccinate, and mixtures thereof, and
b3) optionally at least one non-ionic surfactant, preferably cellulose-based non-ionic surfactants,
c) at least one organic rheology modifier selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof,
d) at least one acrylic-based binder, and
e) at least one additive
f) optionally at least one filler material, in particular at least one first filler material and at least one second filler material wherein the average particle size (D₅₀) of said first filler material is smaller than the average particle size (D₅₀) of the second filler material, and
g) preferably at least one pigment.

Those aqueous coating composition or bases for an aqueous coating composition are particularly preferred in which the at least one organic rheology modifier comprises at least one hydrophobically modified ethylene oxide urethane (HEUR) rheology modifier and at least one urea modified polyurethane. The aforementioned aqueous coating composition or base for an aqueous coating composition represents a very preferred embodiment of the first aqueous coating composition of the kit-of-parts for a coating system according to the present invention. Accordingly, the preferred embodiments described above for the first aqueous coating composition and for the base for an aqueous coating composition are applicable as well for the aforementioned aqueous coating composition and base for an aqueous coating composition.

The present invention is also about the use of the kit-of-parts for a coating system according to the present invention for preparing an at least two-layered, in particular a two-layered, coating on a substrate, in particular a wood substrate.

With the present invention a coating system has surprisingly been found which provides a good adhesion combined with good wood penetration properties as well as a rather low water uptake. In addition, the coating system of the present invention offers the advantage of good self-cleaning properties and a reduced tendency of dirt pickup. For a variety of applications it has been found beneficial that with the coating system of the present invention very good color retention as well as good gloss retention can be accomplished. It has also been found advantageous that a sufficient thickness of the coating system can be provided already with just two coating layers instead of three coating layers thereby allowing to significantly reduce the time needed to prepare a proper coating system for wood substrates while same time guaranteeing low amounts, if any, of volatile organic compounds. Moreover, the first aqueous coating composition can be prepared in a manner to exhibit a high long oil alkyd resin content, in particular a high oxidatively drying long oil alkyd resin content. In particular with the first aqueous coating composition it is possible to obtain a high filler content and/or a high pigment content. It is of particular interest that essentially the same properties in terms of retention of color retention, penetration and surface protection can be obtained with only two coating layers whereas the prior art presently relies on the use of three coating layers. That is, the first coating obtained by use of the first aqueous coating composition in a preferred embodiment combines the properties of a conventional primer layer as well as of a subsequent coating layer. Said first aqueous coating composition of the present invention also allows for very good hiding power, even when included in a tinting system.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, as well as the claims could be essential alone or in every combination for the realization of the invention in its different embodiments.

## Claims

1. Kit-of-parts for a coating system for exterior substrates, in particular wood substrates, comprising
at least two aqueous coating compositions, in particular two aqueous coating compositions, wherein
a) a first aqueous coating composition comprises or consists of
a first oxidatively drying long oil alkyd resin,
at least one surfactant,
at least one organic rheology modifier,
at least one acrylic-based binder and/or polyurethane-based binder,
at least one additive, and
optionally at least one pigment; and wherein
b) a second aqueous coating composition comprises or consists of
at least one organic binder, preferably at least one acrylic-based binder and/or polyurethane-based binder, and in particular at least one acrylic-based binder,
at least one surfactant,
at least one, in particular organic, rheology modifier,
at least one additive, and
optionally at least one pigment and/or
optionally at least one, in particular oxidatively drying, alkyd resin, in particular long oil alkyd resin.

2. Kit-of-parts for a coating system according to claim 1, wherein
said first aqueous coating composition further comprises at least one second oxidatively drying long oil alkyd resin having a lower oil content than the first oxidatively drying alkyd resin.

3. Kit-of-parts for a coating system according to claim 1 or 2, wherein
the additive of said first aqueous coating composition and/or the additive of said second aqueous coating composition comprises at least one drier, at least one defoamer, at least one preservative, in particular at least one biocide, and/or at least one film forming agent.

4. Kit-of-parts for a coating system according to any of the preceding claims, wherein the first oxidatively drying long oil alkyd resin has an oil content of above 75 %, preferably of at least 78 % and more preferred of at least 81 %, and /or wherein the second oxidatively drying long oil alkyd resin has an oil content of not more than 75 %, preferably of not more than 74 % and more preferred of not more than 72 %.

5. Kit-of parts for a coating system according to any of the preceding claims, wherein the second aqueous coating composition does not contain any long oil alkyd resin and in particular does not contain any alkyd resin.

6. Kit-of-parts for a coating system according to any of the preceding claims wherein the first aqueous coating composition and/or the second aqueous coating composition further comprises at least one filler material, in particular silicates.

7. Kit-of-parts for a coating system according to claim 6, wherein
the first aqueous coating composition contains at least two fillers which differ with regard to their chemical structure and/or to their particle size distribution, in particular with regard to their D₅₀ values.

8. Kit-of-parts for a coating system according to claim 7, wherein
said first filler has a D₅₀ value from 2 to 10 µm, preferably from 3 to 6 µm and more preferably from 4 to 5 µm, and wherein
said second filler has a Devalue from 5 to 20 µm, preferably from 6 to 15 µm and more preferably in the range from 6,5 to 10µm.

9. Kit-of-parts for a coating system according to claim 7 or 8, wherein
said first filler has a D₉₀ value not above 20 µm, preferably not above 15 µm and more preferably not above 12 µm.

10. Kit-of-parts for a coating system according to any of the preceding claims, wherein the organic rheology modifier of the first aqueous coating composition is selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof.

11. Kit-of-parts for a coating system according to claim 10, wherein
the first aqueous coating composition comprises at least one hydrophobically modified ethylene oxide urethane (HEUR) rheology modifier and at least one urea modified polyurethane.

12. Kit-of-parts for a coating system according to any of the preceding claims, wherein the at least one surfactant of the first aqueous coating composition comprises at least one cationic surfactant and/or at least one anionic surfactant and/or at least one non-ionic surfactant, preferably at least one cationic surfactant and at least one anionic surfactant and optionally at least one non-ionic surfactant and more preferably at least one cationic surfactant and at least one anionic surfactant and at least one non-ionic surfactant.

13. Kit-of parts for a coating system according to any of the preceding claims wherein the first aqueous coating composition comprises
5 to 40 weight %, preferably 10 to 30 weight % and more preferably 10 to 25 weight % filler material, and/or
5 to 35 weight %, preferably 10 to 30 weight % and more preferably 15 to 25 weight % of the at least one long oil alkyd resin and/or
0,1 to 8 weight %, preferably 0,5 to 7 weight % and more preferably from 1,0 to 5 weight % of the at least one surfactant and/or
2 to 25 weight %, preferably 2 to 20 weight % and more preferably 5 to 15 weight % of the at least one acrylic-based (solid content), binder and/or
5 to 40 weight %, preferably 8 to 30 weight % and more preferably 10 to 25 weight % water, and/or
1 to 40 weight %, preferably 2 to 30 weight % and more preferably 5 to 25 weight % of the at least one pigment,
wherein the components forming the first aqueous coating composition always add up to 100 weight %, and/or wherein
the second aqueous coating composition comprises
2 to 25 weight %, preferably 4 to 20 weight % and more preferably from 5 to 15 weight % of the filler material, and/or
0 to 12 weight %, preferably 0 to 10 weight % and more preferably 1 to 5 weight % of the alkyd resin,
5 to 40 weight %, preferably 10 to 30 weight % and more preferably 12 to 25 weight % of the acrylic-based binder (solid content) and/or
30 to 70 weight %, preferably 35 to 60 weight % and more preferably 40 to 55 weight % water, and/or
0 to 30 weight % or to 30 weight %, preferably 2 to 25 weight % and more preferably 5 to 20 weight % of at least one pigment,
wherein the components forming a second aqueous coating composition always add up to 100 weight %.

14. Kit-of-parts for a coating system according to any of the preceding claims, wherein the first aqueous coating composition is a base composition adapted and arranged to be used for tinting color compositions or wherein said first aqueous coating composition is a tinted color composition and/or wherein the second aqueous coating composition is a base composition adapted and arranged to be used for tinting color compositions or wherein said second aqueous coating composition is a tinted color composition.

15. Kit-of-parts for a coating system according to any of the preceding claims wherein the organic binder in the first and/or second aqueous coating composition is an acrylic binder.

16. Kit-of-parts for a coating system according to any of the preceding claims, wherein the first oxidatively drying long oil alkyd resin is based on pentaerythrityl esters and/or wherein said second oxidatively drying alkyd resin is based on triglycerides.

17. Coating system, in particular wood coating system, comprising a first coating and a second coating obtained or obtainable from the kit-of-parts according to any of the preceding claims, wherein the first coating is obtained or obtainable from the first aqueous coating composition and wherein the second coating is obtained or obtainable from the second aqueous coating composition.

18. Coating system according to claim 17, wherein
the first coating obtained from said first aqueous coating composition has an average thickness of at least 75 µm, preferably of at least 100 µm and more preferably of at least 125 µm and/or wherein
said second coating has an average thickness that is not above 100 µm, preferably not above 75 µm and more preferably not above 60 um.

19. Coating system according to claim 17 or 18, wherein
the first coating is placed on a substrate, in particular a wood substrate, and wherein said second coating is placed on said first coating.

20. Aqueous coating composition or base for an aqueous coating composition, in particular for wood substrates, comprising or consisting of
a1) at least one first oxidatively drying long oil alkyd resin, in particular being based on pentaerythrityl esters, and
a2) at least one second oxidatively drying long oil alkyd resin, in particular being based on triglycerides, wherein said second oxidatively drying long oil alkyd resin has a lower oil content than said first oxidatively drying alkyd resin,
b1) at least one cationic surfactant, in particular selected from the group consisting of polyoxyethylene-(2-15)-cocoalkylamines, polyoxyethylene-(12-18)-tallowalkylamines, polyoxyethylene-(2-15)-oleylamines and mixtures thereof, and
b2) at least one anionic surfactant, in particular selected from the group consisting of sodium lauryl sulfate, sodium octylphenol glycolether sulfate, sodium dodecylbenzene sulfonate, sodium lauryldiglycol sulfate, ammonium tritertiarybutyl phenol and penta- and octa-glycol sulfonates, sulfosuccinate salts, in particular disodium ethoxylated nonylphenol half esters of sulfosuccinic acid, disodium n-octyldecyl sulfosuccinate, sodium dioctyl sulfosuccinate, and mixtures thereof, and
b3) optionally at least one non-ionic surfactant, preferably cellulose-based non-ionic surfactants,
c) at least one organic rheology modifier selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof,
d) at least one acrylic-based binder, and
e) at least one additive
f) optionally at least one filler material, in particular at least one first filler material and at least one second filler material wherein the average particle size (D₅₀) of said first filler material is smaller than the average particle size (D₅₀) of the second filler material, and
g) preferably at least one pigment.

21. Aqueous coating composition or base for an aqueous coating composition according to claim 20, wherein
the at least one organic rheology modifier comprises at least one hydrophobically modified ethylene oxide urethane (HEUR) rheology modifier and at least one urea modified polyurethane.

22. Use of the kit-of-parts for a coating system according to any of claim 1 to 16 for preparing an at least two-layered, in particular a two-layered, coating on a substrate, in particular a wood substrate.
